Europäisches Patentamt

European Patent Office

Office européen des brevets

(19)

(11) **EP 0 961 723 B1**

(12) **EUROPÄISCHE PATENTSCHRIFT**

(45) Veröffentlichungstag und Bekanntmachung des Hinweises auf die Patenterteilung:
**09.06.2004  Patentblatt 2004/24**

(21) Anmeldenummer: **98908026.2**

(22) Anmeldetag: **30.01.1998**

(51) Int Cl.$^7$: **B60T 13/74**

(86) Internationale Anmeldenummer:
**PCT/EP1998/000507**

(87) Internationale Veröffentlichungsnummer:
**WO 1998/033690 (06.08.1998 Gazette 1998/31)**

(54) **VERFAHREN UND REGELSYSTEM ZUM AUFBRINGEN DEFINIERTER BETÄTIGUNGSKRÄFTE**

METHOD AND REGULATING SYSTEM FOR APPLYING DEFINED ACTUATING FORCES

PROCEDE ET SYSTEME DE REGLAGE POUR L'APPLICATION DE FORCES D'ACTIONNEMENT DEFINIES

(84) Benannte Vertragsstaaten:
**DE FR GB IT**

(30) Priorität: **01.02.1997  DE 19703838**

(43) Veröffentlichungstag der Anmeldung:
**08.12.1999  Patentblatt 1999/49**

(73) Patentinhaber: **Continental Teves AG & Co. OHG**
**60488 Frankfurt am Main (DE)**

(72) Erfinder: **BÖHM, Jürgen**
**D-65558 Oberneisen (DE)**

(74) Vertreter: **Dusil, Vladimir, Dipl.-Ing.**
**Continental Teves AG & Co.oHG,**
**Guerickestrasse 7**
**60488 Frankfurt am Main (DE)**

(56) Entgegenhaltungen:
DE-A- 3 444 301          DE-A- 19 508 822
DE-A- 19 510 522          DE-A- 19 526 645
DE-A- 19 536 694

EP 0 961 723 B1

**Beschreibung**

Die Erfindung betrifft ein Verfahren sowie ein Regelsystem zum Aufbringen definierter Betätigungskräfte, mit denen Bremsbeläge an eine Bremsscheibe angedrückt werden, bei einer mittels eines Aktuators elektrisch betätigbaren Bremse, bei dem ein erster, statischer Zusammenhang zwischen ihrem Betätigungsweg, der zum Andrücken der Bremsbeläge an die Bremsscheibe zurückzulegen ist, und der durch den Aktuator aufgebrachten Betätigungskraft der Bremse besteht, wobei aus dem ersten Zusammenhang sowie einer Information, die Änderungen des ersten Zusammenhangs repräsentiert, ein zweiter, dem Betrieb der Bremse entsprechender Zusammenhang ermittelt wird, wobei die die Änderungen des ersten Zusammenhangs repräsentierende Information durch Auswertung von während des Betriebs der Bremse auftretenden Signalen, die der Lage des Aktuators sowie dem dem Aktuator zuzuführenden Stromwert entsprechen, ermittelt wird und in einem Verschiebeweg einer den ersten Zusammenhang darstellenden, verschobenen statischen Kennlinie besteht.

Ein derartiges Verfahren sowie eine elektromotorische Bremse, bei der das Verfahren durchgeführt werden kann, sind aus der DE 195 26 645 A1 bekannt. Zur Durchführung des vorbekannten Verfahrens sind Kraftsensoren zur Ermittlung der wirkenden Bremskräfte bzw. Bremsmomente bzw. der Anpresskraft der Bremsbeläge erforderlich. Die genannten Kraftsensoren stellen jedoch Bauteile dar, deren Verwendung mit erheblichem Kostenaufwand verbunden ist. Außerdem ist es besonders schwierig, derartige Bauteile, die u. a. potentielle Fehlerquellen darstellen, in eine elektromechanisch betätigbare Bremse zu integrieren. Ein weiterer Nachteil des vorbekannten Verfahrens besteht darin, dass lediglich Verschiebungen der den ersten Zusammenhang darstellenden Kennlinie auf der Betätigungswegachse zur Kompensation des Bremsbelagverschleißes berücksichtigt werden. Temperatureinflüsse und Änderungen der Steifigkeit der Bremse, bedingt durch Belagverschleiß und Temperatur, werden dagegen nicht berücksichtigt.

Es ist daher Aufgabe der vorliegenden Erfindung, ein Verfahren sowie ein Regelsystem vorzuschlagen, die es ermöglichen, bei der Ermittlung der im Betrieb auftretenden Betätigungskräfte auf den Einsatz zusätzlicher externer Sensorik bzw. auf die direkte Messung der Betätigungskraft zu verzichten. Darüber hinaus sollen bei der Ermittlung der Betätigungskräfte die Steifigkeitsänderungen berücksichtigt werden.

Diese Aufgabe wird verfahrensmäßig dadurch gelöst, dass die die Änderungen des ersten Zusammenhangs repräsentierende Information zusätzlich in einer Dehnung oder Stauchung der den ersten Zusammenhang darstellenden Kennlinie besteht, und dass der zweite Zusammenhang nach der Formel:

$$F_{Bet} = f(X_{Bet}) = \lambda * f_{Basis}(X_{Bet} - X_V) \tag{1}$$

ermittelt wird, wobei

$f_{Basis}$     den ersten Zusammenhang,
$\lambda$     einen Dehnung- oder Stauchungsfaktor,
$X_{Bet}$     den Betätigungsweg der Bremse und
$X_V$     den Verschiebeweg bedeuten.

Bei einer vorteilhaften Weiterbildung des Erfindungsgegenstandes wird zur Bestimmung eines der Betätigungskraft entsprechenden Anteils des dem Aktuator zuzuführenden Stromes zusätzlich die Geschwindigkeit bzw. die Beschleunigung des Aktuators ermittelt.

Nach einem weiteren vorteilhaften Erfindungsmerkmal wird ein den ersten Zusammenhang beinhaltendes mathematisches Modell der Bremse verwendet, in dem der der Betätigungskraft entsprechende Anteil des dem Aktuator zuzuführenden Stromes der zur Bestimung sowohl des Dehnungs- oder Stauchungsfaktors als auch des Verschiebeweges mittels eines Parameterschätzverfahrens herangezogen wird.

Die ermittelten Werte des Dehnungs- oder Stauchungsfaktors als auch des Verschiebeweges werden vorzugsweise vor ihrer Verwendung auf Plausibilität geprüft, wobei das Parameterschätzverfahren unter Verwendung des die Geschwindigkeit des Aktuators repräsentierenden Signals überwacht wird.

Der Schwerpunkt bei dem vorgestellten Verfahren zur modellbasierten Rekonstruktion der Betätigungskraft stellt daher die Modellierung von zustandsbedingten Änderungen der zugrundeliegenden Kennlinie (Basiskennlinie) und die Methoden zur Bestimmung der Adaptionsparameter auf der Basis interner Aktuator- und Bremsensignale. Diese sind von entscheidender Bedeutung und stellen die Grundlage für eine möglichst genaue Betätigungskraftdosierung auf der Basis interner Aktuatorsignale dar.

Bei der Nutzung der aktualisierten statischen Kennlinie zur Betätigungskraftdosierung sind grundsätzlich zwei Vorgehensweisen denkbar, die im folgenden näher betrachtet werden. Dabei wird bevorzugt die Betätigungskraft als Funktion des Betätigungsweges betrachtet, da hier nur die effektive Steifigkeit des Gesamtsystems und deren zustandsabhängige Variationen zu berücksichtigen sind.

Ein erfindungsgemäßes Regelsystem zur Durchführung des vorhin erwähnten Verfahrens zeichnet sich dadurch aus, dass

a) ein Lageregler vorgesehen ist, dem als Eingangssignal die Regeldifferenz zwischen eine Aktuator-Sollage und eine Aktuator-Istlage repräsentierenden Signalen zugeführt wird und dem ein elektronischer Servoverstärker nachgeschaltet ist, mit dessen Ausgangssignal der Aktuator angesteuert wird, daß

b) ein Kennlinienanpassung- und Anpassungsüberwachungsmodul vorgesehen ist, dem das Ausgangssignal des Servoverstärkers und das die Aktuator-Istlage repräsentierende Signal als Eingangsgrößen zugeführt werden und welches eine Information über im Betrieb der Bremse auftretende Änderungen des ersten Zusammenhangs liefert, die

c) einem Kennfeldmodul zugeführt wird, das unter Berücksichtigung der Änderungsinformation aus Betätigungskraft-Sollwerten Betätigungsweg-Sollwerte berechnet und dem ein Umrechnungsmodul nachgeschaltet ist, das aus den Betätigungsweg-Sollwerten die die Aktuator-Sollage repräsentierenden Signale berechnet.

Eine zweite Variante des Regelsystems zur Durchführung des erfindungsgemäßen Verfahrens besteht darin, dass

a) ein Verzögerungsregler vorgesehen ist, dem als Eingangssignal die Regeldifferenz zwischen einen Betätigungskraft-Sollwert und einen Betätigungskraft-Istwert repräsentierenden Signalen zugeführt wird und dem ein elektronischer Servoverstärker nachgeschaltet ist, mit dessen Ausgangssignal der Aktuator angesteuert wird, dass

b) ein Kennlinienanpassung- und Anpassungsüberwachungsmodul vorgesehen ist, dem das Ausgangssignal des Servoverstärkers und das die Aktuator-Istlage repräsentierende Signal als Eingangsgrößen zugeführt werden und welches einerseits eine Information über im Betrieb der Bremse auftretende Änderungen des ersten Zusammenhangs und andererseits ein den Betätigungsweg-Istwert repräsentierendes Signal liefert, die

c) einem Kennfeldmodul zugeführt werden, das unter Berücksichtigung der Änderungsinformation aus den Betätigungsweg-Istwerten Betätigungskraft-Istwerte berechnet.

Das Umrechnungsmodul stellt dabei vorzugsweise ein mathematisches Modell eines zwischen Aktuator und Bremse wirkenden Getriebes dar. Außerdem kann die Information über im Betrieb der Bremse auftretende Änderungen des ersten Zusammenhangs dem Verzögerungsregler zur Aktualisierung dessen Parameter zugeführt werden.

Bei einem Einsatz der Bremse in einem Kraftfahrzeug ist es besonders sinnvoll, wenn dem Kennlinienanpassung- und Anpassungsüberwachungsmodul eine die Drehzahl des Kraftfahrzeugrades repräsentierende Information zugeführt wird.

Weitere Einzelheiten, Merkmale und Vorteile der Erfindung gehen aus der nachfolgenden Beschreibung von zwei Ausführungsbeispielen unter Bezugnahme auf die beiliegende Zeichnung hervor, in der für einander entsprechende Einzelteile gleiche Bezugszeichen verwendet werden. In der Zeichnung zeigt:

Fig. 1    eine erste Ausführung eines Regelkreises zur Durchführung des erfindungsgemäßen Verfahrens,

Fig. 2    eine zweite Ausführung eines Regelkreises zur Durchführung des erfindungsgemäßen Verfahrens in einer der Fig. 1 entsprechenden Darstellung,

Fig. 3    ein die Funktionsweise des in Fig. 2 gezeigten Kennfeldmoduls darstellendes Diagramm, und

Fig. 4    ein die Funktionsweise des in Fig. 2 gezeigten Kennfeldadaptions- und Überwachungsmoduls darstellendes Flußdiagramm.

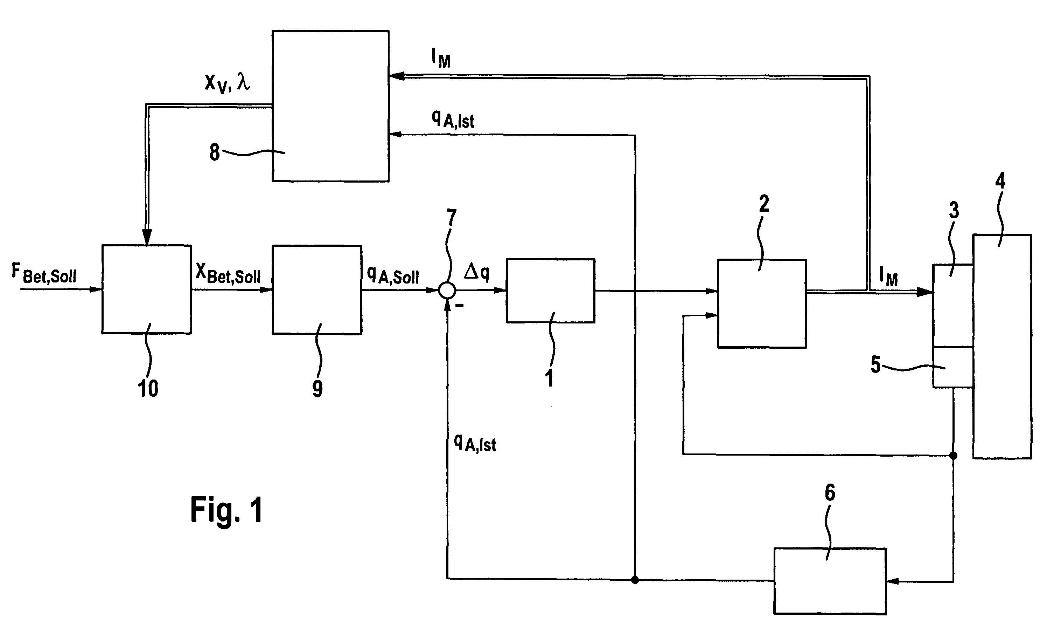

Das in Fig. 1 dargestellte Regelsystem sieht die Umrechnung des (vom Fahrer signalisierten oder von einer übergeordneten Funktioneinheit vorgegebenen) Verzögerungswunschsignals (hier bevorzugt ßetätigungskraft $F_{Bet,soll}$) in einen korrespondierenden Lage-Sollwert mit Hilfe einer gespeicherten inversen Kennlinie vor (Betätigungskraftsteuerung). Die Aktualisierung der Kennlinie erfolgt mit Hilfe eines mathematischen Modells für die elektromechanische Bremse einschließlich eines Modells für die zustandsabhängige Änderung der Kennlinie auf der Basis meßtechnisch leicht zugänglicher Aktuatorsignalsensorik. Das gezeigte Regelsystem besteht im wesentlichen aus einem Lageregler 1, sowie einem dem Lageregler 1 nachgeschalteten elektronischen Servoverstärker 2, mit dessen Ausgangssignal $I_M$ ein nur schematisch angedeuteter Aktuator 3 einer elektromechanisch betätigbarer Bremse angesteuert wird, die mit dem Bezugszeichen 4 bezeichnet ist. Der Aktuator 3 ist vorzugsweise mit einem Winkelmeßsystem 5 ausgestattet, dessen die Aktuator-Istlage repräsentierendes Ausgangssignal einerseits dem Servoverstärker 2 und andererseits einer Lagesignalaufbereitungsschaltung 6 zugeführt wird. Das Ausgangssignal $q_{A,Ist}$ der Lagesignalaufbereitungsschaltung 6 wird einerseits einer dem Lageregler 1 vorgeschalteten Summationsstelle 7 und andererseits zusammen mit dem Signal $I_M$ einem Kennlinienanpassungs- und Anpassungsüberwachungs-modul 8 zugeführt, in dem zur Erhöhung der Zuverlässigkeit zusätzlich eine Überwachung der Adaption und Plausibilitätsprüfung der ermittelten Adaptionsparameter stattfindet. In der Summationsstelle 7 wird aus einem eine Aktuator-Sollposition $q_{A,Soll}$ repräsentierenden Signal und dem vorhin erwähnten Signal $q_{A,Ist}$ eine Regelabweichung $\Delta q$ gebildet, die als Eingangsgröße des Lagereglers 1 dient. Das Signal $q_{A,soll}$ wird dabei vorzugsweise von einem Getriebemodul 9 erzeugt, das das Verhalten eines zwischen dem Aktuator 3 und der Bremse 4 wirkungsmäßig angeordneten, nicht dargestellten Untersetzungsgetriebes berücksichtigt. Dem Getriebemodul 9 ist ein Kennfeldmodul 10 vorgeschaltet, in dem eine inverse statische Kennlinie f ($F_{Bet,soll}$) des Teilsystems Aktuator 3 - Bremse 4 abgelegt ist und in dem ein einen z. B. vom Fahrer eines mit der vorhin erwähnten Bremse ausgerüsteten Kraftfahrzeuges oder einer übergeordneten Funktionseinheit vorgegebenen Betätigungskraft-Sollwert repräsentierendes Signal $F_{Bet,Soll}$ unter dem Einfluß des Kennlinienanpassungs- und Anpassungsüberwachungsmoduls 8 in einen Betätigungsweg-Sollwert $X_{Bet,Soll}$ umgerechnet wird. Die den Umrechnungsablauf im Kennfeldmodul 10 beeinflussenden, vom Kennlinienanpassungs- und Anpassungsüberwachungsmodul 8 gelieferten Parameter $X_V$ und $\lambda$ stellen eine Information über im ßetrieb der Bremse 4 auftretende Änderungen des Zusammenhangs zwischen ihrem Betätigungsweg X und ihrer Betätigungskraft F', wobei $X_V$ die Verschiebung der Basiskennlinie in Richtung $\pm X_{Bet}$ und $\lambda$ den Dehnungs- oder Stauchungsfaktor der erwähnten Kennlinie bedeuten.

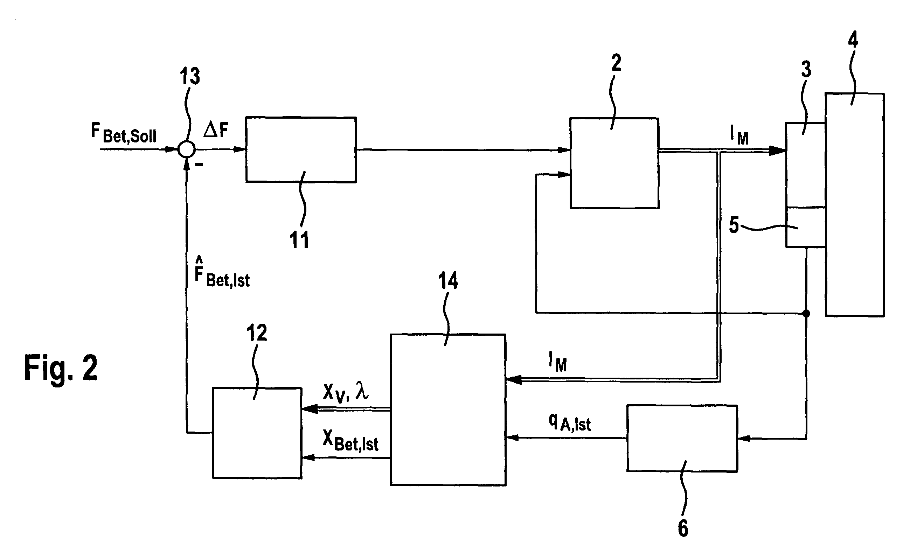

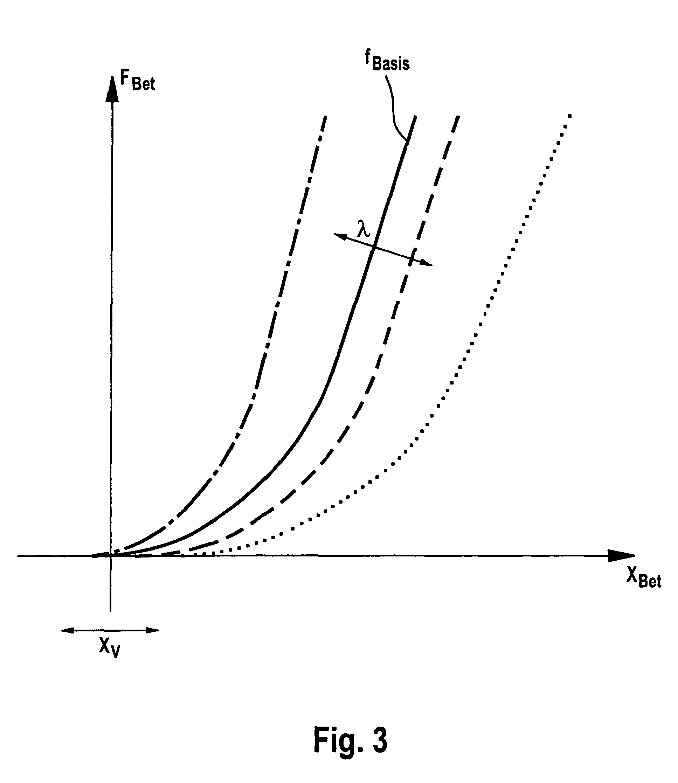

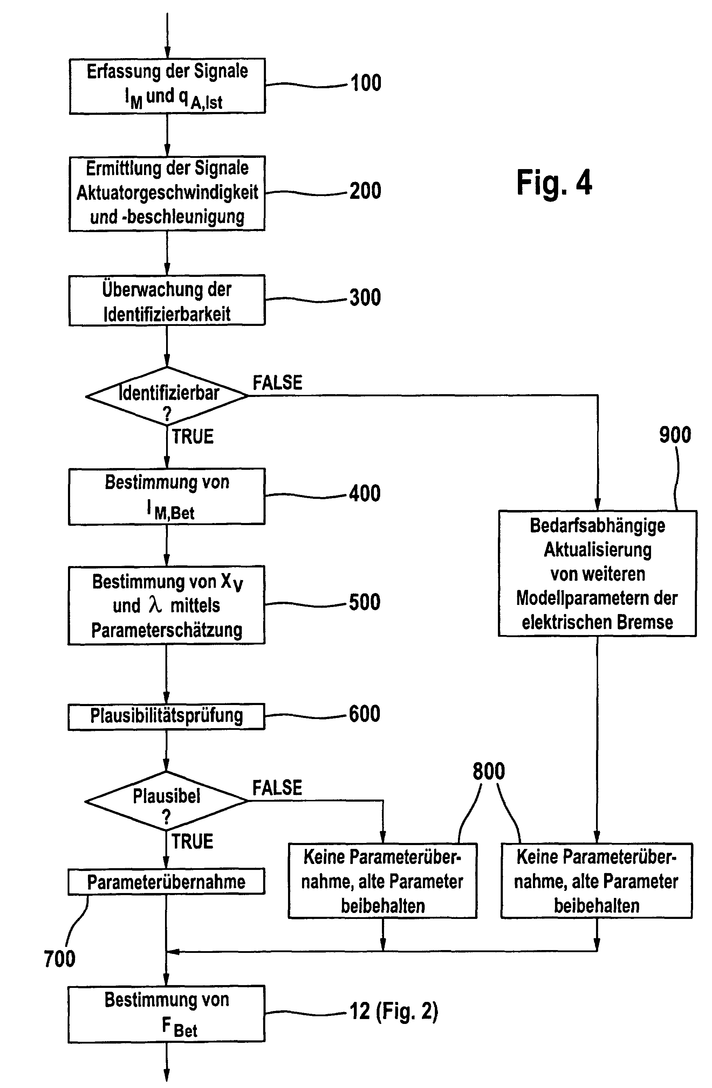

Ein wesentliches Kennzeichen des in Fig. 2 dargestellten Regelsystems ist die Rekonstruktion des Verzögerungswunschsignals (hier bevorzugt: Betätigungskraft) aus der gemessenen Lageinformation mit Hilfe einer gespeicherten und aktualisierten Kennlinie zur Betätigungskraftregelung sowie eines, im wesentlichen auf Aktuatorsignalsensorik und mathematischen Modellen basierenden, Kennlinienadaptions- und - Überwachungsmoduls. Bei dem gezeigten Regelsystem wird statt des im Zusammenhang mit Fig. 1 erwähnten Lagereglers 1 ein Verzögerungsregler 11 verwendet. Sonst entspricht die Schaltungsanordnung weitgehend dem in Fig. 1 dargestellten Schaltbild. Dem Kennlinienanpassungs- und Anpassungsüberwachungsmodul 14, das außer den vorhin erwähnten Parametern $X_V$, $\lambda$ noch ein einem Betätigunsweg-Istwert $X_{Bet,Ist}$ entsprechendes Signal liefert, ist ein Kennfeldmodul 12 nachgeschaltet, in dem eine statische Kennlinie $f(X_{Bet,Ist})$ der Baugruppe Aktuator - Radbremse abgelegt ist und dessen Ausgangsgröße $F_{Bet,Ist}$ einer Summationsstelle 13 zugeführt wird, in der aus dem den vorhin erwähnten Betätigungskraft-Sollwert $F_{Bet,Soll}$ repräsentierenden Signal und dem Signal $F_{Bet,Ist}$ eine Regelabweichung $\Delta F$ gebildet wird, die als Eingangsgröße des Verzögerungsreglers 1 dient. Das den Betätigungskraft-Sollwert $F_{Bet,Soll}$ repräsentierende Signal wird wieder, wie bei der Anordnung nach Fig. 1, z. B.von dem Fahrer eines mit der vorhin erwähnten Bremse ausgerüsteten Kraftfahrzeuges oder einer übergeordneten Funktionseinheit vorgegeben, wobei im Kennfeldmodul 12 das den Betätigungsweg-Istwert repräsentierende Signal $X_{Bet,Ist}$ unter dem Einfluß des Kennlinienanpassungs- und Anpassungsüberwachungsmoduls 14 in einen Betätigungskraft-Istwert $F_{Bet,Ist}$ umgerechnet wird.

Zu der vorhin angesprochenen, in Fig. 3 gezeigten statischen Kennlinie ist Folgendes zu sagen:

Eine gewünschte Betätigungskraft kann durch eine definierte Verschiebung der Bremsbeläge gegenüber der Bremsscheibe erreicht werden. Das Verhalten des betrachteten Prozesses entspricht daher im wesentlichen dem eines Federsystems mit variabler Federsteifigkeit $K_E$ und kann durch eine statische Kennlinie für die Betätigungskraft $F_{Bet}$ in Abhängigkeit des Betätigungsweges $X_{Bet}$ hinreichend genau modelliert werden:

$$F_{Bet} = K_E(X_{Bet}) \cdot X_{Bet} , \qquad \textit{für } X_{Bet} \geq 0 , 0 \textit{ sonst} \qquad (2)$$

Das grundlegende Verhalten der elektrischen Bremse wird durch eine statische Kraft-Weg-Kennlinie z.B. entsprechend Gl. (2) abgebildet. Sie kann beispielsweise durch signifikante Punktepaare in Form einer Tabelle mit einer gewissen Anzahl von Stützstellen abgelegt sein. Die Teilung muß dabei nicht notwendigerweise äquidistant sein. Zwischenpunkte dieser Tabelle werden im Bremsenbetrieb on-line durch lineare Interpolation bzw. Extrapolation berechnet. Neben der Beschreibung durch ein nichtparametrisches Modell in der o.g. Form sind auch Beschreibungsformen, z.B. durch ein parametrisches Modell, denkbar und möglich. Die in Tabellenform vorliegende Kennlinie stellt eine Basiskennlinie dar (Index B bzw. Basis) und repräsentiert das statische Verhalten der elektrischen Bremse in ihrem "Normalzustand". Zustandabhängige Variationen dieser Kennlinie, im wesentlichen durch Erwärmung und Verschleiß, müssen im laufenden Betrieb der Bremse erfaßt und adaptiert werden. Dabei wird angenommen, daß zustandsabhängige Änderungen des statischen Verhaltens der Bremse das durch die Basiskennlinie formulierte Verhalten grundsätzlich nicht verändert und durch folgende Modifikationen der Basiskennlinie abgebildet werden kann:

- Verschiebung der Basiskennlinie um $X_v$ in $\pm X_{Bet}$-Richtung und /oder
- Dehnung oder Stauchung der verschobenen Basiskennlinie durch einen Faktor $\lambda$.

Mit diesem Modellansatz kann die aktuell vorliegende Kennlinie aus der Basiskennlinie entsprechend Gl. (1) generiert werden. Die wesentliche Aufgabe besteht nun darin, im laufenden Bremsenbetrieb die Adaptionsparameter zu bestimmen und somit eine Aktualisierung der statischen Kennlinie zu erreichen.

Die Basis für die in Fig. 4 dargestellte Methode zur Rekonstruktion stellt dabei die im allgemeinen leicht meßbare Aktuatorlage und die Basiskennlinie dar, die über einen entsprechenden Modellansatz mit Hilfe der internen Aktuatorsignale fortlaufend oder bei Bedarf aktualisiert wird.

Nach der Erfassung der Aktuatorsignale $I_M$ und $q_{A,Ist}$ (s. Funktionsblock 100) erfolgt die Ermittlung der Signale, die der Aktuatorgeschwindigkeit und -beschleunigung entsprechen (s. Funktionsblock 200).

Vor der Bestimmung der Adaptionsparameter wird anhand der Bewegungsrichtung des Aktuators geprüft, ob in dem gegenwärtigen Bewegungszustand die Betätigungskraftinformation im Aktuatorstrom feststellbar und eine aktuatorsignalbasierte Bestimmung der Adaptionsparameter zur Aktualisierung der Basiskennlinie sicher möglich ist (s. Funktionsblock 300).

Ist die Identifizierbarkeit festgestellt, so folgt eine Zustandsschätzung von $I_{M,\,Bet}$ (s. Funktionsblock 400). Hierzu wird eine punktweise abgespeicherte Basiskennlinie $F_{Bet,B}(X_{Bet})$ für die elektrische Bremse betrachtet, so daß bei bekannter Lage $X_{Bet}$ mit Hilfe der Basiskennlinie durch lineare Interpolation ein Schätzwert für die Betätigungskraft im "Normalzustand" ermittelt werden kann:

$$\hat{F}_{Bet.B} = m_B(i) \cdot X_{Bet} + b_B(i) \tag{3}$$

wobei

$m_B$ die Steifigkeit des Gesamtsystems im betrachteten Intervall,

$b_B$ ein Kraftoffsetwert und

i das betrachtete Intervall

bedeuten.

Gl. (3) gibt die resultierende Betätigungskraft bei einem bestimmten Verschiebeweg für den Fall, daß das aktuelle Verhalten der elektrischen Bremse gerade dem der Basiskennlinie entspricht, an. Die Berücksichtigung zustandsbedingter Variationen dieser Kennlinie erfolgt auf der Basis der in Fig. 3 dargestellten Maßnahmen. Die zustandsabhängigen Änderungen des statischen Verhaltens der Gruppe Aktuator - Bremse werden durch folgende Modifikation der Basiskennlinie abgebildet:

$$\hat{F}_{Bet} = \lambda \cdot m_B(i) \cdot X_{Bet} + b_B(i) - \lambda \cdot m_B(i) \cdot X_V \,. \tag{4}$$

Das Aufbringen einer Betätigungskraft $F_{Bet}$ für die Bremse führt über das Getriebesystem zu einer Belastung des Aktuators (allgemein: $I_{M,Bet}$). Liegt beispielsweise ein Elektromotor als Aktuator vor, so ergibt sich durch diese Kraft ein Belastungsmoment. Der Aktuatorstrom $I_M$ ist dabei gerade so groß, daß die am Aktuator wirkenden Lastkräfte (im wesentlichen Reibung und Belastung durch die Betätigungskraft) kompensiert werden und den Aktuator einschließlich der angekoppelten Mechanik auf die kommandierte Geschwindigkeit beschleunigt. (Zwischen dem Aktuatorstrom und der die Aktuatorbewegung erzeugende Aktuatorkraft/-moment besteht ein definierter (bekannter) und den Aktuator kennzeichnenden Zusammenhang. In vielen Fällen ist dieser Zusammenhang linear.) Bei dieser Konfiguration ist daher im Aktuatorstrom bzw. Aktuatorkraft bzw. -moment die vollständige Information über die dem Aktuator entgegenwirkenden Belastungskräften bzw. -momenten, insbesondere auch über die aufgebrachte Betätigungskraft, enthalten.

Die Zustandsschätzung von $I_{M,Bet}$ (s. Funktionsblock 300) erfolgt anhand der gemessenen Aktuatorsignale mit Hilfe eines Störsignalbeobachters, basierend auf einem mathematischen Modell für den elektromechanischen Antriebsstrang der elektrischen Bremse. Dabei ist zu beachten, daß das rekonstruierte Signal $I_{M,Bet}$ sowohl die Belastung des Aktuators durch die Betätigungskraft $F_{Bet}$ als auch die durch diese Belastung bedingte Erhöhung der Reibung im elektromechanischen Antriebsstrang repräsentiert.

Beim Betätigen der Bremse muß der Aktuator gegen die Belastung und gegen den mechanischen Wirkungsgrad arbeiten, so daß die Betätigungskraftinformation in jedem Fall in dem Aktuatorstrom enthalten und signifikant feststellbar ist. Beim Betätigen der Bremse ist daher eine Bestimmung der Adaptionsparameter zur Aktualisierung der Kraft-Weg-Kennlinie anhand der Aktuatorsignale möglich. Beim Lösen der Bremse besteht insbesondere bei schlechtem mechanischen Wirkungsgrad die Möglichkeit, daß diese Information nicht mehr signifikant im Strom feststellbar ist. In diesem Fall kann beim Lösen der Bremse eine Aktualisierung der Kennlinie nicht vorgenommen werden.

Zur Identifikation der Parameter $\lambda$ und $X_V$ auf der Basis des rekonstruierten Signals $I_{M,Bet}$ unter Berücksichtigung von Gl. (4) kann ein aus der einschlägigen Literatur bekanntes rekursives oder nichtrekursives Parameterschätzverfahren verwendet werden, das im allgemeinen auf der Minimierung eines quadratischen Gütekriteriums beruht (s. Funktionsblock 500). Da hierbei weitgehend bekannte Verfahren zum Einsatz kommen, soll im weiteren auf eine detaillierte Betrachtung der Verfahren zur Parameterschätzung verzichtet werden. Bei der Anwendung des Parameterschätzers ist darauf zu achten, daß eine Identifikation der gesuchten Parameter gewährleistet wird und die Identifikation nur dann sinnvolle Ergebnisse liefern kann, wenn eine ausreichende Anregung der Parameter durch die Signale vorliegt.

Weiterhin ist es sinnvoll, die geschätzten Parameter auf Plausibilität zu prüfen (s. Funktionsblock 600) und erst nachdem die Verfügbarkeit plausibler Adaptionsparameter festgestellt ist, diese auch als aktuelle Parameter freizugeben (s. Funktionsblock 700). Ansonsten können die alten Parameter beibehalten werden (s. Funktionsblock 800).

Die Rekonstruktion der Betätigungskraft erfolgt dabei entsprechend Gl. (4) mit Hilfe der Basiskennlinie und unter ßerücksichtigung der auf der Basis von Aktuatorsignalsensorik identifizierter Adaptionsparameter (s. Pos. 12, Fig. 2).

Wurde keine Identifizierbarkeit festgestellt, so können weitere Modellparameter der elektrischen Bremse bedarfsabhängig aktualisiert werden (s. Funktionsblock 900), wobei bei der Bestimmung von $F_{Bet}$ (s. Pos. 12, Fig. 2) die relevanten Parameter des vorangegangenen Schrittes beibehalten werden (s. Funktionsblock 800).

**Patentansprüche**

1. Verfahren zum Aufbringen definierter Betätigungskräfte ($F_{Bet}$), mit denen Bremsbeläge an eine Bremsscheibe angedrückt werden, bei einer mittels eines Aktuators (3) elektrisch betätigbaren Bremse (4), bei dem ein erster, statischer Zusammenhang zwischen ihrem Betätigungsweg ($X_{Bet}$), der zum Andrücken der Bremsbeläge an die Bremsscheibe zurückzulegen ist, und der durch den Aktuator (3) aufgebrachten Betätigungskraft ($F_{Bet}$) der Bremse (4) besteht, wobei aus dem ersten Zusammenhang sowie einer Information, die Änderungen des ersten Zusammenhangs repräsentiert, ein zweiter, dem Betrieb der Bremse (4) entsprechender Zusammenhang ermittelt wird, wobei die die Änderungen des ersten Zusammenhangs repräsentierende Information durch Auswertung von während des Betriebs der Bremse auftretenden Signalen, die der Lage des Aktuators sowie dem dem Aktuator zuzuführenden Stromwert entsprechen, ermittelt wird und in einem Verschiebeweg ($X_v$) einen den ersten Zusammenhang darstellenden, verschobenen statischen Kennlinie besteht, **dadurch gekennzeichnet, dass** die die Änderungen des ersten Zusammenhangs repräsentierende Information zusätzlich in einer Dehnung oder Stauchung der den ersten Zusammenhang darstellenden Kennlinie besteht, und dass der zweite Zusammenhang nach der Formel:

$$F_{Bet} = f\,(X_{Bet}) = \lambda * f_{Basis}\,(X_{Bet} - X_V)$$

   ermittelt wird,
   wobei

   | | |
   |---|---|
   | $f_{Basis}$ | den ersten Zusammenhang, |
   | $\lambda$ | einen Dehnung- oder Stauchungsfaktor, |
   | $X_{Bet}$ | den Betätigungsweg der Bremse und |
   | $X_v$ | den Verschiebeweg bedeuten. |

2. Verfahren nach Anspruch 1 **dadurch gekennzeichnet, dass** zur Bestimmung eines der Betätigungskraft ($F_{Bet}$) entsprechenden Anteils ($I_{M,Bet}$) des dem Aktuator (3) zuzuführenden Stromes (IM) zusätzlich die Geschwindigkeit bzw. die Beschleunigung des Aktuators (3) ermittelt wird.

3. Verfahren nach Anspruch 1 oder 2 **dadurch gekennzeichnet, dass** ein den ersten Zusammenhang ($f_{Basis}$) beinhaltendes mathematisches Modell der Bremse verwendet wird, in dem der der Betätigungskraft ($F_{Bet}$) entsprechende Anteil ($I_{M,Bet}$) des dem Aktuator zuzuführenden Stromes ($I_M$) der zur Bestimmung sowohl des Dehnungs- oder Stauchungsfaktors ($\lambda$) als auch des Verschiebeweges ($X_v$) mittels eines Parameterschätzverfahrens herangezogen wird.

4. Verfahren nach Anspruch 3 **dadurch gekennzeichnet, dass** die ermittelten Werte des Dehnungs- oder Stauchungsfaktors ($\lambda$) als auch des Verschiebeweges ($X_v$) vor ihrer Verwendung auf Plausibilität geprüft werden.

5. Verfahren nach Anspruch 3 **dadurch gekennzeichnet, dass** das Parameterschätzverfahren unter Verwendung des die Geschwindigkeit des Aktuators repräsentierenden Signals überwacht wird.

6. Regelsystem zum Aufbringen definierter Betätigungskräfte ($F_{Bet}$), mit denen Bremsbeläge an eine Bremsscheibe angedrückt werden, bei einer mittels eines Aktuators (3) elektrisch betätigbaren Bremse (4), bei dem ein erster, statischer Zusammenhang zwischen ihrem Betätigungsweg ($X_{Bet}$), der zum Andrücken der Bremsbeläge an die Bremsscheibe zurückzulegen ist, und der durch den Aktuator (3) aufgebrachten Betätigungskraft ($F_{Bet}$) der Bremse (4) besteht, wobei aus dem ersten Zusammenhang sowie einer Information, die Änderungen des ersten Zusammenhangs repräsentiert, ein zweiter, dem Betrieb der Bremse (4) entsprechender Zusammenhang ermittelt wird, wobei die die Änderungen des ersten Zusammenhangs repräsentierende Information durch Auswertung von während des Betriebs der Bremse auftretenden Signalen, die der Lage des Aktuators sowie dem dem Aktuator zuzuführenden Stromwert entsprechen, ermittelt wird und in einem Verschiebeweg ($X_v$) einer den ersten Zusammenhang darstellenden, verschobenen statischen Kennlinie besteht, **dadurch gekennzeichnet, dass**

a) ein Lageregler (1) vorgesehen ist, dem als Eingangssignal die Regeldifferenz zwischen eine Aktuator-Sollage ($q_{A,Soll}$) und eine Aktuator-Istlage ($q_{A,Ist}$) repräsentierenden Signalen zugeführt wird und dem ein elektronischer Servoverstärker (2) nachgeschaltet ist, mit dessen Ausgangssignal ($I_M$) der Aktuator (3) angesteuert wird, dass

b) ein Kennlinienanpassung- und Anpassungsüberwachungsmodul (8) vorgesehen ist, dem das Ausgangssignal ($I_M$) des Servoverstärkers (2) und das die Aktuator-Istlage ($q_{A,Ist}$) repräsentierende Signal als Eingangsgrößen zugeführt werden und welches eine Information über im Betrieb der Bremse (4) auftretende Änderungen des ersten Zusammenhangs liefert, die

c) einem Kennfeldmodul (10) zugeführt wird, das unter Berücksichtigung der Änderungsinformation aus Betätigungskraft-Sollwerten ($F_{Bet,Soll}$) Betätigungsweg-Sollwerte ($X_{Bet,Soll}$) berechnet und dem ein Umrechnungsmodul (9) nachgeschaltet ist, das aus den Betätigungsweg-Sollwerten ($X_{Bet,Soll}$) die die Aktuator-Sollage ($q_{A,Soll}$) repräsentierenden Signale berechnet.

7. Regelsystem zum Aufbringen definierter Betätigungskräfte ($F_{Bet}$), mit denen Bremsbeläge an eine Bremsscheibe angedrückt werden, bei einer mittels eines Aktuators (3) elektrisch betätigbaren Bremse (4), bei dem ein erster, statischer Zusammenhang zwischen ihrem Betätigungsweg ($X_{Bet}$) , der zum Andrücken der Bremsbeläge an die Bremsscheibe zurückzulegen ist, und der durch den Aktuator (3) aufgebrachten Betätigungskraft ($F_{Bet}$) der Bremse (4) besteht, wobei aus dem ersten Zusammenhang sowie einer Information, die Änderungen des ersten Zusammenhangs repräsentiert, ein zweiter, dem Betrieb der Bremse (4) entsprechender Zusammenhang ermittelt wird, wobei die die Änderungen des ersten Zusammenhangs repräsentierende Information durch Auswertung von während des Betriebs der Bremse auftretenden Signalen, die der Lage des Aktuators sowie dem dem Aktuator zuzuführenden Stromwert entsprechen, ermittelt wird und in einem Verschiebeweg ($X_v$) einer den ersten Zusammenhang darstellenden, verschobenen statischen Kennlinie besteht, **dadurch gekennzeichnet, dass**

a) ein Verzögerungsregler (11) vorgesehen ist, dem als Eingangssignal die Regeldifferenz ( F) zwischen einen Betätigungskraft-Sollwert ($F_{Bet,soll}$) und einen Betätigungskraft-Istwert ($F_{Bet,Ist}$) repräsentierenden Signalen zugeführt wird und dem ein elektronischer Servoverstärker (2) nachgeschaltet ist, mit dessen Ausgangssignal ($I_M$) der Aktuator (3) angesteuert wird, dass

b) ein Kennlinienanpassung- und Anpassungsüberwachungsmodul (14)vorgesehen ist, dem das Ausgangssignal ($I_M$) des Servoverstärkers (2) und das die Aktuator-Istlage ($q_{A;Ist}$) repräsentierende Signal als Eingangsgrößen zugeführt werden und welches einerseits eine Information über im Betrieb der Bremse (4) auftretende Änderungen des ersten Zusammenhangs und andererseits ein den Betätigungsweg-Istwert ($X_{Bet,Ist}$) repräsentierendes Signal liefert, die

c) einem Kennfeldmodul (12) zugeführt werden, das unter Berücksichtigung der Änderungsinformation aus den Betätigungsweg-Istwerten ($X_{Bet,Ist}$) Betätigungskraft-Istwerte ($F_{Bet,Ist}$) berechnet.

8.  Regelsystem nach Anspruch 6 **dadurch gekennzeichnet, dass** das Umrechnungsmodul (9) ein mathematisches Modell eines zwischen Aktuator (3) und Bremse (4) wirkenden Getriebes darstellt.

9.  Regelsystem nach Anspruch 7 **dadurch gekennzeichnet, dass** die Information über im Betrieb der Bremse (4) auftretende Änderungen des ersten Zusammenhangs dem Verzögerungsregler (11) zur Aktualisierung dessen Parameter zugeführt wird.

10. Regelsystem nach Anspruch 6 oder 7, wobei die Bremse in einem Kraftfahrzeug eingesetzt wird, **dadurch gekennzeichnet, dass** dem Kennlinienanpassung- und Anpassungsüberwachungsmodul (8,14) eine die Drehzahl des Kraftfahrzeugrades repräsentierende Information zugeführt wird.

**Claims**

1.  Process of generating defined actuating forces ($F_{bet}$) by which brake pads are pressed against a brake disc, in a brake (4) which is electrically operable by way of an actuator (3), wherein there is a first static relation between the brake's actuating travel ($X_{Bet}$) which has to be covered for application of the brake pads against the brake disc, and the actuating force ($F_{Bet}$) of the brake (4) generated by the actuator (3), wherein a second relation which corresponds to the operation of the brake (4) is determined from the first relation and an information which represents variations of the first relation, wherein the information representing the variations of the first relation is determined by evaluation of signals which occur during operation of the brake, said signals corresponding to the position of the actuator and the current value to be sent to the actuator, and consists of a displacement travel ($X_V$) of a shifted static characteristic curve which depicts the first relation,
    **characterized in that** the information which represents the variations of the first relation in addition consists of an extension or compression of the characteristic curve depicting the second relation, and **in that** the second relation is determined according to the formula

    $$F_{Bet} = f(X_{Bet}) = \lambda * f_{Basis} (X_{Bet} - X_V)$$

    wherein

    $f_{Basis}$     is the first relation,
    $\lambda$        is an extension or compression factor,
    $X_{Bet}$     is the actuating travel of the brake, and
    $X_V$       is the displacement travel.

2.  Process as claimed in claim 1,
    **characterized in that** the speed or the acceleration of the actuator (3) is additionally established to determine a portion ($I_{M, Bet}$) of the current ($I_M$) being supplied to the actuator (3), the said portion corresponding to the actuating force ($F_{Bet}$).

3.  Process as claimed in claim 1 or 2,
    **characterized in that** a mathematical model of the brake comprising the first relation ($f_{Basis}$) is used, wherein the portion ($I_{M,Bet}$) of the current ($I_M$) being supplied to the actuator (3), the said portion corresponding to the actuating force ($F_{Bet}$), is taken into account to determine both the extension or compression factor ($\lambda$) and the displacement travel ($X_V$) by means of a parameter estimation process.

4.  Process as claimed in claim 3,
    **characterized in that** the established values of the extension or compression factor ($\lambda$) and of the displacement travel ($X_V$) are checked for plausibility before they are employed.

5.  Process as claimed in claim 3,
    **characterized in that** the parameter estimation process is monitored by using the signal representative of the speed of the actuator.

6. Control system for generating defined actuating forces ($F_{bet}$) by which brake pads are pressed against a brake disc, in a brake (4) which is electrically operable by way of an actuator (3), wherein there is a first static relation between the brake's actuating travel ($X_{Bet}$) which has to be covered for application of the brake pads against the brake disc, and the actuating force ($F_{Bet}$) of the brake (4) generated by the actuator (3), wherein a second relation which corresponds to the operation of the brake (4) is determined from the first relation and an information which represents variations of the first relation, wherein the information representing the variations of the first relation is determined by evaluation of signals which occur during operation of the brake, said signals corresponding to the position of the actuator and the current value to be sent to the actuator, and consists of a displacement travel ($X_V$) of a shifted static characteristic curve which depicts the first relation,
**characterized in that** there is provision of:

a) a position controller (1) to which the control difference between a nominal actuator position ($q_{A,Soll}$) and signals representative of the actual actuator position ($q_{A,Ist}$) is sent as an input signal, and connected downstream of which controller is an electronic servo booster (2) having an output signal ($I_M$) used to actuate the actuator (3),

b) a characteristic curve adaptation and adaptation monitoring module (8), to which the output signal ($I_M$) of the servo booster (2) and the signal representative of the actual actuator position ($q_{A,Ist}$) are sent as input quantities, and which furnishes an information about variations of the first relation which occur during operation of the brake (4),

c) and the information is sent to a performance graph module (10) which calculates actuating travel nominal values ($X_{Bet,Soll}$) from actuating force nominal values ($F_{Bet,Soll}$) in consideration of the variation information, and connected downstream of which module is a conversion module (9) which calculates signals representative of the nominal actuator position ($q_{A,Soll}$) from the actuating travel nominal values ($X_{Bet,Soll}$).

7. Control system for generating defined actuating forces ($F_{bet}$) by which brake pads are pressed against a brake disc, in a brake (4) which is electrically operable by way of an actuator (3), wherein there is a first static relation between the brake's actuating travel ($X_{Bet}$) which has to be covered for application of the brake pads against the brake disc, and the actuating force ($F_{Bet}$) of the brake (4) generated by the actuator (3), wherein a second relation which corresponds to the operation of the brake (4) is determined from the first relation and an information which represents variations of the first relation, wherein the information representing the variations of the first relation is determined by evaluation of signals which occur during operation of the brake, said signals corresponding to the position of the actuator and the current value to be sent to the actuator, and consists of a displacement travel ($X_V$) of a shifted static characteristic curve which depicts the first relation,
**characterized in that** there is provision of:

a) a deceleration controller (11) to which the control difference ($\Delta F$) between signals representative of an actuating force nominal value ($F_{Bet,Soll}$) and an actuating force actual value ($F_{Bet,Ist}$) is sent as an input signal, and connected downstream of which controller is an electronic servo booster (2) having an output signal ($I_M$) which actuates the actuator (3),

b) a characteristic curve adaptation and adaptation monitoring module (14) to which the output signal ($I_M$) of the servo booster (2) and the signal representative of the actual actuator position ($q_{A,Ist}$) are sent as input quantities, and which furnishes an information about variations of the first relation which occur during operation of the brake (4), on the one hand, and a signal representative of the actuating travel actual value ($X_{Bet,Ist}$), on the other hand, which

c) are sent to a performance graph module (12) which calculates actuating force actual values ($F_{Bet, Ist}$) from actuating travel actual values ($X_{Bet,Ist}$) in consideration of the variation information.

8. Control system as claimed in claim 6,
**characterized in that** the conversion module (9) represents a mathematical model of a gear that acts between the actuator (3) and the brake (4).

9. Control system as claimed in claim 7,
**characterized in that** the information about variations of the first relation, which occur during operation of the brake (4), are sent to the deceleration controller (11) to update its parameters.

**10.** Control system as claimed in claim 6 or claim 7, wherein the brake is installed in an automotive vehicle, **characterized in that** an information representative of the rotational speed of the automotive vehicle wheel is sent to the characteristic curve adaptation and adaptation monitoring module (8,14).

**Revendications**

**1.** Procédé pour appliquer des forces d'actionnement ($F_{Bet}$) définies par lesquelles des garnitures de frein sont pressées contre un disque de frein, dans le cas d'un frein (4) pouvant être actionné électriquement au moyen d'un actionneur (3), dans lequel il existe une première relation statique entre sa course d'actionnement ($X_{Bet}$) qui doit être franchie pour presser les garnitures de frein contre le disque de frein, et la force d'actionnement ($F_{Bet}$) du frein (4), appliquée par l'actionneur (3), tandis que de la première relation ainsi que d'une information qui représente des variations de la première relation, on obtient une deuxième relation, correspondant au fonctionnement du frein (4), l'information, représentant les variations de la première relation, étant obtenue par exploitation de signaux se produisant pendant le fonctionnement du frein et qui correspondent à la position de l'actionneur ainsi qu'à la valeur du courant à amener à l'actionneur, et consistant en une distance de déplacement ($X_v$) d'une courbe caractéristique statique déplacée, représentant la première relation, **caractérisé en ce que** l'information, qui représente les variations de la première relation, consiste en outre en un allongement ou une compression de la courbe caractéristique représentant la première relation, et **en ce que** la deuxième relation est obtenue suivant la formule :

$$F_{Bet} = f(X_{Bet}) = \lambda * f_{Basis}(X_{Bet} - X_v),$$

dans laquelle

$f_{Basis}$     désigne la première relation,

$\lambda$     un facteur d'allongement de compression

$X_{Bet}$     la course d'actionnement du frein, et

$X_v$     la distance de déplacement.

**2.** Procédé selon la revendication 1, **caractérisé en ce que** pour déterminer une partie ($I_{M,Bet}$), correspondant à la force d'actionnement ($F_{Bet}$), du courant ($I_M$) à amener à l'actionneur (3), on détermine en outre la vitesse ou l'accélération de l'actionneur (3).

**3.** Procédé selon la revendication 1 ou 2, **caractérisé en ce qu'**on utilise un modèle mathématique contenant la première relation ($f_{Basis}$) du frein, dans lequel la fraction ($I_{M,Bet}$), correspondant à la force d'actionnement ($F_{Bet}$), du courant ($I_M$) devant être amené à l'actionneur, est utilisée pour déterminer aussi bien le facteur d'allongement ou de compression ($\lambda$) que la distance de déplacement ($X_v$) au moyen d'un procédé d'estimation de paramètres.

**4.** Procédé selon la revendication 3, **caractérisé en ce que** les valeurs obtenues du facteur d'allongement ou de compression ($\lambda$) ainsi que de la distance de déplacement ($X_v$) sont contrôlées quant à leur plausibilité avant leur utilisation.

**5.** Procédé selon la revendication 3, **caractérisé en ce que** le procédé d'estimation de paramètres est contrôlé par utilisation du signal représentant la vitesse de l'actionneur.

**6.** Système de régulation pour appliquer des forces d'actionnement ($F_{Bet}$) définies au moyen desquelles des garnitures de frein sont pressées contre un disque de frein, dans le cas d'un frein (4) pouvant être actionné électriquement au moyen d'un actionneur (3), dans lequel il existe une première relation statique entre sa course d'actionnement ($X_{Bet}$) qui doit être franchie pour presser les garnitures de frein contre le disque de frein, et la force d'actionnement ($F_{Bet}$) du frein (4), appliquée par l'actionneur (3), tandis que de la première relation ainsi que d'une information qui représente les variations de la première relation, on obtient une deuxième relation, correspondant au fonctionnement du frein (4), l'information, représentant les variations de la première relation, étant obtenue par exploitation de signaux se produisant pendant le fonctionnement du frein et qui correspondent à la position de l'actionneur ainsi qu'à la valeur du courant à amener à l'actionneur, et consistant en une distance de déplacement

($X_v$) d'une courbe caractéristique statique déplacée, constituant la première relation, **caractérisé en ce que** :

a) il est prévu un régulateur de position (1) auquel sont envoyés comme signal d'entrée des signaux représentant la différence de régulation entre une position de consigne de l'actionneur ($q_{A,Soll}$) et une position réelle de l'actionneur ($q_{A,ist}$), et en aval duquel est monté un servo-amplificateur électronique (2) dont le signal de sortie ($I_M$) commande l'actionneur (3), **en ce que**

b) il est prévu un module d'adaptation de courbe caractéristique et de contrôle d'adaptation (8) auquel est envoyé le signal de sortie ($I_M$) du servo-amplificateur (2) et le signal, représentant la position réelle de l'actionneur ($q_{A,ist}$), comme grandeurs d'entrée, et qui fournit une information relative à des variations de la première relation survenant pendant le fonctionnement du frein (4), laquelle information

c) est envoyée à un module de courbes caractéristiques (10) qui, en tenant compte de l'information de variation, calcule des valeurs de consigne de la course d'actionnement ($X_{Bet,Soll}$) , à partir de valeurs de consigne de la force d'actionnement ($F_{Bet,Soll}$), et en aval duquel est monté un module de conversion (9) qui calcule, à partir des valeurs de consigne de la course d'actionnement ($X_{Bet,Soll}$), les signaux représentant la position de consigne de l'actionneur ($q_{A,Soll}$).

**7.** Système de régulation pour appliquer des forces d'actionnement ($F_{Bet}$) définies, au moyen desquelles des garnitures de frein sont pressées contre un disque de frein, dans le cas d'un frein (4) pouvant être actionné électriquement au moyen d'un actionneur (3), dans lequel il existe une première relation statique entre sa course d'actionnement ($X_{Bet}$) qui doit être franchie pour presser les garnitures de frein contre le disque de frein, et la force d'actionnement ($F_{Bet}$) du frein (4) appliquée par l'actionneur (3), tandis que de la première relation ainsi que d'une information qui représente les variations de la première relation on obtient une deuxième relation, correspondant au fonctionnement du frein (4), l'information, représentant les variations de la première relation, étant obtenue par exploitation de signaux se produisant pendant le fonctionnement du frein et qui correspondent à la position de l'actionneur ainsi qu'à la valeur du courant à amener à l'actionneur, et consistant en une distance de déplacement ($X_v$) d'une courbe caractéristique statique déplacée, constituant la première relation, **caractérisé en ce que** :

a) il est prévu un régulateur de ralentissement (11) auquel est envoyé, comme signal d'entrée, la différence de régulation (F) entre une valeur de consigne de la force d'actionnement ($F_{Bet,Soll}$) et des signaux représentant une valeur réelle de la force d'actionnement ($F_{Bet,ist}$), et en aval duquel est monté un servo-amplificateur électronique (2) dont le signal de sortie ($I_M$) commande l'actionneur (3), **en ce que**

b) il est prévu un module d'adaptation de courbe caractéristique et de contrôle d'adaptation (8) auquel est envoyé le signal de sortie ($I_M$) du servo-amplificateur (2) et le signal, représentant la position réelle de l'actionneur ($q_{A,ist}$), comme grandeurs d'entrée, et qui fournit d'une part une information relative à des variations de la première relation survenant pendant le fonctionnement du frein (4), et d'autre part un signal représentant la valeur réelle de course d'actionnement ($X_{Bet,ist}$) , information et signal qui

c) sont envoyés à un module de courbes caractéristiques (12) qui, en tenant compte de l'information de variation, calcule des valeurs réelles de la force d'actionnement ($F_{Bet,ist}$) à partir des valeurs réelles de la course d'actionnement ($X_{bet,ist}$).

**8.** Système de régulation selon la revendication 6, **caractérisé en ce que** le module de conversion (9) constitue un modèle mathématique d'une transmission agissant entre l'actionneur (3) et le frein (4).

**9.** Système de régulation selon la revendication 7, **caractérisé en ce que** l'information concernant des variations, survenant pendant le fonctionnement du frein (4), de la première relation, est amenée au régulateur de ralentissement (11) pour actualiser ses paramètres.

**10.** Système de régulation selon la revendication 6 ou 7, dans lequel le frein est utilisé dans un véhicule automobile, **caractérisé en ce qu'**au module d'adaptation de courbe caractéristique et de contrôle d'adaptation (8, 14) est amenée une information représentant la vitesse de rotation de la roue du véhicule automobile.

Fig. 1

Fig. 2

Fig. 3

**Fig. 4**

```
Erfassung der Signale
I_M und q_{A,Ist}                    ──── 100

Ermittlung der Signale
Aktuatorgeschwindigkeit
und -beschleunigung                  ──── 200

Überwachung der
Identifizierbarkeit                  ──── 300

        Identifizierbar    ──FALSE──────────────────────────┐
            ?                                                │
           TRUE                                              │
                                                          900
Bestimmung von
I_{M,Bet}                            ──── 400

                                              Bedarfsabhängige
Bestimmung von X_V                            Aktualisierung
und λ mittels                        ──── 500  von weiteren
Parameterschätzung                            Modellparametern der
                                              elektrischen Bremse

Plausibilitätsprüfung                ──── 600

                                 800
        Plausibel   ──FALSE───┐
            ?                  │
           TRUE               │
                      Keine Parameterüber-    Keine Parameterüber-
Parameterübernahme    nahme, alte Parameter   nahme, alte Parameter
                      beibehalten             beibehalten
   700

Bestimmung von
F_{Bet}                              ──── 12 (Fig. 2)
```